# EUROPÄISCHE PATENTSCHRIFT

(11) **EP 0 508 257 B1**
(45) Veröffentlichungstag und Bekanntmachung des Hinweises auf die Patenterteilung: **28.08.1996**
(21) Anmeldenummer: 92105443.3
(22) Anmeldetag: 30.03.1992
(51) Int. Cl.: G02B 21/00, G01J 3/44, G01N 21/65

(54) **Spektroskopiekorrelierte Licht-Rastermikroskopie**
Scanning microspectroscope
Microspectroscope à balayage

(30) Priorität: 12.04.1991 DE 4111903
(43) Veröffentlichungstag der Anmeldung: 14.10.1992
(73) Patentinhaber: BAYER AG, 51368 Leverkusen (DE)
(72) Erfinder: Jacobsen, Wolfgang, Dr., W-5000 Köln 80 (DE)

(56) Entgegenhaltungen:
- APPLIED SPECTROSCOPY Bd. 44, Nr. 10, Dezember 1990, BALTIMORE US Seiten 1679 - 1684 M.BOWDEN ET AL : 'Automated micro-Raman mapping and imaging applied to silicon devices and zirconia ceramic stress and grain boundary morphology'
- OPTICAL ENGINEERING Bd. 28, Nr. 6, Juni 1989, BELLINGHAM US Seiten 675 - 682 B. JAGGI ET AL : 'Design of a solid-state microscope'
- APPLIED OPTICS Bd. 29, Nr. 33, November 1990, NEW YORK US Seiten 4969 - 4980 D.K.VEIRS ET AL: 'Mapping materials properties with Raman spectroscopy utilizing a 2-D detector'
- MEASUREMENT SCIENCE AND TECHNOLOGY Bd. 1, Nr. 12, Dezember 1990, BRISTOL GB Seiten 1311 - 1313 M. TSUKAKOSHI ET AL : 'Laser microfluorometer with intensified photodiode array detector and scan stage'

## Beschreibung

Die vorliegende Erfindung betrifft ein Verfahren zur Erzeugung und Korrelation lichtmikroskopischer Bilder und mit nach Wellenlänge aufgelösten Meßdaten von Proben mittels konfokaler, scannender Lichtmikroskopie und Spektrometern.

Es ist bekannt (Applied Physics 22(1980), p.119), lichtmikroskopische Aufnahmen von transparenten oder semitransparenten Testobjekten durch scannende Lichtmikroskopie zu erstellen. Entspricht der Strahlengang dem Prinzip des konfokalen Lichtmikroskops (CLSM), so erhält man sogenannte optische Schnittbilder, d.h. Bilder von einer schmalen Zone um die Fokusebene des Mikroskop-Objektivs. Liegt die Fokusebene innerhalb des untersuchten Objektes, so werden infolge des konfokalen Prinzips die Intensitäten aus den darüber und darunter liegenden Bereichen der Probe weitgehend eliminiert. Seit mehreren Jahren sind Geräte, die nach dem Prinzip arbeiten, kommerziell erhältlich.

Es ist ferner bekannt, Informationen über die chemische Struktur eines Prüfobjektes dadurch zu gewinnen, daß dieses Objekt durch spektroskopische Methoden untersucht wird, insbesondere auch unter Verwendung von Licht aus dem sichtbaren Spektralbereich oder aus Bereichen in der Nähe des sichtbaren Spektrums.

Auch die Kopplung lichtmikroskopischer und spektroskopischer Techniken ist aus der Literatur bekannt:
Bereits von den meisten Herstellern kommerzieller konfokaler Lichtmikroskope realisiert ist das Konzept der Erzeugung von Remissionsbildern im Fluoreszenzkontrast. Hierzu wird die Probe mit einer monochromatischen Lichtquelle beleuchtet. In den Abbildungsstrahlengang wird ein optisches Filter eingefügt, das das Licht mit der Wellenlänge der Beleuchtungslichtquelle möglichst vollständig zurückhält, so daß nur das längerwellige Fluoreszenzlicht zum Fotoempfänger gelangt.

Aus Microscopica Acta 79 (1977), 3, p. 267-276, ist weiter die Ergänzung des Abbildungsstrahlengangs eines konventionellen Lichtmikroskops um einen Spektrographen bekannt, der auf eine bestimmte Raman-Linie einer ausgewählten, im Prüfobjekt vorhandenen Substanz eingestellt war. Auf diese Weise wird eine mikroskopische Raman-Dunkelfeldaufnahme des Objektes erzeugt Diese Aufnahme gibt die örtliche Verteilung der ausgewählten Substanz in dem Prüfobjekt wieder.

Aus Nature 347, (20.09.1990) p. 301-303, ist bekannt, das Konzept des konfokalen, optischen Strahlengangs zu nutzen, um das vollständige Raman-Spektrum eines kleinen vorwählbaren Meßvolumens innerhalb des Prüfobjektes aufnehmen zu können. Hierzu wird das Prüfobjekt mit einem Laser über eine stationäre Anordnung nach dem Konzept des konfokalen Strahlengangs beleuchtet und das durch die Lochblende des Abbildungsstrahlengangs hindurchgehende Licht in einem Raman-Spektrometer analysiert. Auf diese Weise erhält man das Raman-Spektrum eines ausgewählten Meßvolumens der Größenordnung 1 µm**3.

Der Fachartikel "Automated Micro-Raman Mapping..." von M.Bowden et al. in Appl. Spectrosc., 44 (Dez.90), S. 1679-1684, beschreibt ein Abbildungsverfahren durch eine Punkt zu Punkt Abbildung der Ramanrückstreuung, die bei der Laserbestrahlung ausgewählter Substrate gemessen wird. Hierbei wird die Probe durch eine Schrittmotorsteuerung in 500 nm Schritten entlang der Oberfläche (in Richtung von x und y) bewegt. Die Laserstrahlung eines Argonionenlasers wird auf die Oberfläche fokussiert, das Ramanstreulicht der Probe wird gefiltert und über einen Monochromator einem Diodenaray als Detektor zugeführt.

Nachteilig aller dieser in der Literatur bekannten Verfahren der Kopplung lichtmikroskopischer und spektroskopischer Techniken ist, daß die volle Leistungskraft beider Techniken nicht gleichzeitig voll ausgeschöpft wird:
Das bisher übliche Verfahren der konfokalen Fluoreszenzmikroskopie nutzt nur die mittlere vom jeweiligen Meßfilter durchgelassene Fluoreszenzintensität zum Bildaufbau aus. Die Einzelheiten des Fluoreszenz-Spektrums werden dagegen nicht genutzt. Das Verfahren nach Microscopia Acta 79 (1977), 3, p. 267-276, liefert keine dreidimensionalen mikroskopischen Informationen wie die konfokale Lichtmikroskopie, sondern nur zweidimensionale Bilder und verwendet überdies von den in den Raman-Spektren vorhandenen Informationen bei einer Aufnahme jeweils nur diejenigen einer vorher ausgewählten Linie.

Das Verfahren nach Nature 247, p. 301-303, bietet wegen der fehlenden scannenden, mikroskopischen Bilderzeugung ebenfalls keine dreidimensionale mikroskopische Information, wohl aber liefert es das gesamte Raman-Spektrum des untersuchten Probenvolumens.

Es bestand daher die Aufgabe, ein Verfahren zu finden, daß die Ausnutzung der vollen Leistungsfähigkeit konfokaler, scannender Lichtmikroskope und spektrometrischer Methoden zuläßt.

Insbesondere bestand die Aufgabe darin, eine datenreduzierende Art der Korrelation zwischen dem durch das konfokale, scannende Lichtmikroskop erhaltene Bild einer Probe und seinem Spektrum zu finden.

Die Aufgabe wird durch die Merkmale des Anspruchs 1 gelöst.

Weitere bevorzugte Durchführungsformen sind den abhängigen Ansprüchen zu entnehmen.

Als konfokales, scannendes Lichtmikroskop sind alle Anordnungen geeignet, bei denen der Probenausschnitt mit einem fokussierenden Lichtstrahl abgetastet wird und bei denen ein Teil des durchgehenden oder des gestreuten Lichtes durch einen abbildenden, optischen Strahlengang auf eine Lochblende oder auf ein System von Lochblenden abgebildet wird und bei denen der durch die jeweilige Lochblende hindurchgehende Teil dieses Lichtes mit einem fotoelektrischen Detektor gemessen und mit Hilfe dieses Meßsignals ein Bild des gesamten Probenausschnittes erzeugt wird. Insbesondere seien Anordnungen entsprechend dem Konzept des konfokalen Laserscanning-Mikroskops (vgl. z.B. T. Wilson Ed., Confocal Microscopy, Academic Press London etc. 1990) und Anordnungen entsprechend dem Konzept der rotierenden Lochscheibe genannt. Das auf diese Weise erzeugte Bild des Probenausschnittes kann sowohl ein Schnittbild senkrecht zur optischen Achse des Mikroskops sein als auch das Bild einer beliebig orientierten Schnittebene, insbesondere auch einer solchen, die in der Richtung der optischen Achse des Mikroskops verläuft.

Als spektroskopische Meßverfahren seien alle Methoden genannt, die auf der Registrierung der wellenlängenabhängigen Intensität von sichtbarem Licht beruhen bzw. von Licht mit einer Wellenlänge in der Nähe des sichtbaren Lichtes, z.B. von 100 nm bis 20 µm. Insbesondere seien genannt die Absorptionsspektroskopie im ultravioletten, im sichtbaren, im nahen Infrarot- und im Infrarotbereich sowie die Fluoreszenz- und die Raman-Spektroskopie. Die Anregungswellenlänge für die Fluoreszenz-Spektroskopie liegt wiederum im Bereich 100 nm bis 20 µm, vorzugsweise im Bereich 300 nm bis 700 nm. Die Anregungswellenlänge für die Raman-Spektroskopie liegt ebenfalls im Bereich 100 nm bis 20 µm, vorzugsweise im Bereich 250 nm bis 1,5 µm.

Als simultan registrierendes Spektrometer seien alle Anordnungen genannt, die es gestatten, für den gesamten für das jeweilige spektroskopische Verfahren relevanten Wellenlängenbereich oder für Teile davon die im Meßlicht enthaltene Strählungsintensität pro Wellenlängenintervall zeitaufgelöst zu messen. Bevorzugt seien genannt ein Einfach- oder Mehrfach-Spektrograph, besonders bevorzugt eine Dreifach-Spektrographenanordnung mit einem linienförmigen oder flächenförmigen fotoelektrischen Empfänger. Besonders bevorzugt sei als Empfänger ein zweidimensionales CCD-Array (charge coupled device) genannt.

Es ist überraschend, daß trotz der mehrjährigen kommerziellen Nutzung des konfokalen Lichtmikroskops bisher noch keine volle Kopplung mit spektroskopischen Techniken realisiert worden ist. Allerdings führt eine unmittelbare und direkte Kopplung ohne besondere Maßnahmen zur Datenreduktion zu enormen Datenraten und Datenmengen, wie das folgende Zahlenbeispiel zeigt: Spektroskopische Intensitätsmessungen mit 8 Bit Auflösung und auf 1 024 Wellenlängen-Stützpunkten führen in Verknüpfung mit der Erzeugung eines Bildes von 512*512 Pixeln zu einer Datenmenge von 268 MByte pro Bild und damit bei einer Bildfrequenz von 1 Hz zu einer Datenrate von 268 MByte/sec.

Das erfindungsgemäße Verfahren ermöglicht die simultane oder aufeinanderfolgende Aufnahme eines konfokalen, lichtmikroskopischen, optischen Schnittbildes einerseits und eines Satzes von spektroskopischen Intensitätsverteilungen andererseits, und zwar derart, daß anhand dieser Informationen anschließend zu jedem geeignet gewählten Ausschnitt dieses optischen Schnittbildes das zugeordnete mittlere Spektrum des eingesetzten spektroskopischen Verfahrens angegeben werden kann. D.h. für die im lichtmikroskopischen Bild durch unterschiedlichen Kontrast hervortretenden morphologischen Strukturelemente lassen sich getrennte Informationen über deren chemische Struktur ermitteln. Beispiele sind die stoffliche Identifizierung der einzelnen Phasen in mehrphasigen Polymeren, die Lokalisierung und Identifizierung von Additiven und von Verunreinigungen in Polymeren oder die Lokalisierung von Wirkstoffen in biologischen Präparaten.

Das erfindungsgemäße Verfahren wird durch die nachfolgenden Beispiele und durch die Zeichnung näher erläutert.
- Fig. 1: zeigteinen prinzipiellen Aufbau zur Durchführung des Verfahrens,
- Fig. 2: erläutert die Durchführung des Verfahrens mit einer mechanischen Zuordnung der Spektren zu den Bildpunkten,
- Fig. 3: erläutert die Durchführung des Verfahrens mit einer elektronischen Zuordnung der Spektren zu den Bildpunkten,
- Fig. 4: zeigt die Aufteilung eines Probenbildes in fünf Objekte und den Untergrund durchein Bildanalysesystem.

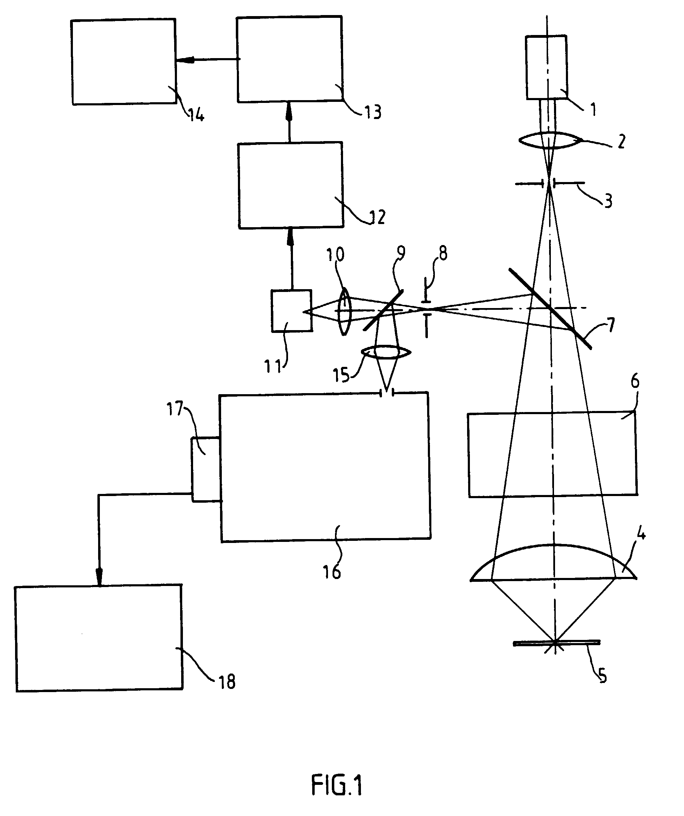

Die prinzipielle Durchführung des Verfahrens sei anhand eines konfokalen Laserscanning-Mikroskopes erläutert (siehe Fig. 1):

Das vom Laser 1 emittierte Licht wird über eine Fokussierungsoptik 2 auf die Eintritts-Lochblende 3 fokussiert. Diese Blende wird vom Mikroskopobjektiv 4 auf bzw. in die zu untersuchende Probe 5 abgebildet. Die zwischen Blende und Objektiv liegende Ablenkeinheit 6 führt dazu, daß dieser Laserstrahl den gewählten Probenausschnitt zeilenförmig abrastert.

Das von der Probe remittierte Licht wird vom Mikroskopobjektiv 4 wieder gesammelt und über den Strahlenteiler 7 auf eine zweite Lochblende 8 fokussiert. Ein Teil des durch diese Blende hindurchgehenden Lichtes wird durch den Strahlenteiler 9 hindurch über eine weitere Optik 10 auf einen Fotoempfänger 11 geleitet. Das von dem Fotoempfanger erzeugte elektrische Signal wird in der Signalverarbeitungseinheit 12 verstärkt und analog/digital gewandelt. Das digitalisierte CLSM-Bild kann in einem Rechnersystem 13 weiterverarbeitet, gespeichert und aufeinem Ausgabegerät 14 angezeigt werden.

Der vom Strahlenteiler 9 abgelenkte Teil der Rückstreuintensität wird von der Optik 15 auf den Eintrittsspalt des Spektrographen 16 abgebildet Dieser erzeugt hiervon simultan eine spektrale Zerlegung, die vom linien- oder flächenförmigen Fotoempfänger 17 detektiert wird. Das elektrische Signal diese Fotoempfängers wird in der spektroskopischen Auswerteeinheit 18 verstärkt.

In den beiden Beispielen wird die Kopplung eines konfokalen Laserscanning-Mikroskops mit einem Raman-Spektrographen beschrieben. Die Beispiele unterscheiden sich in der Art der Registrierung der spektroskopischen Meßdaten.

### Beispiel 1 beschreibt die Ablenkung des Raman-Streulichtes mit einem Drehspiegel.

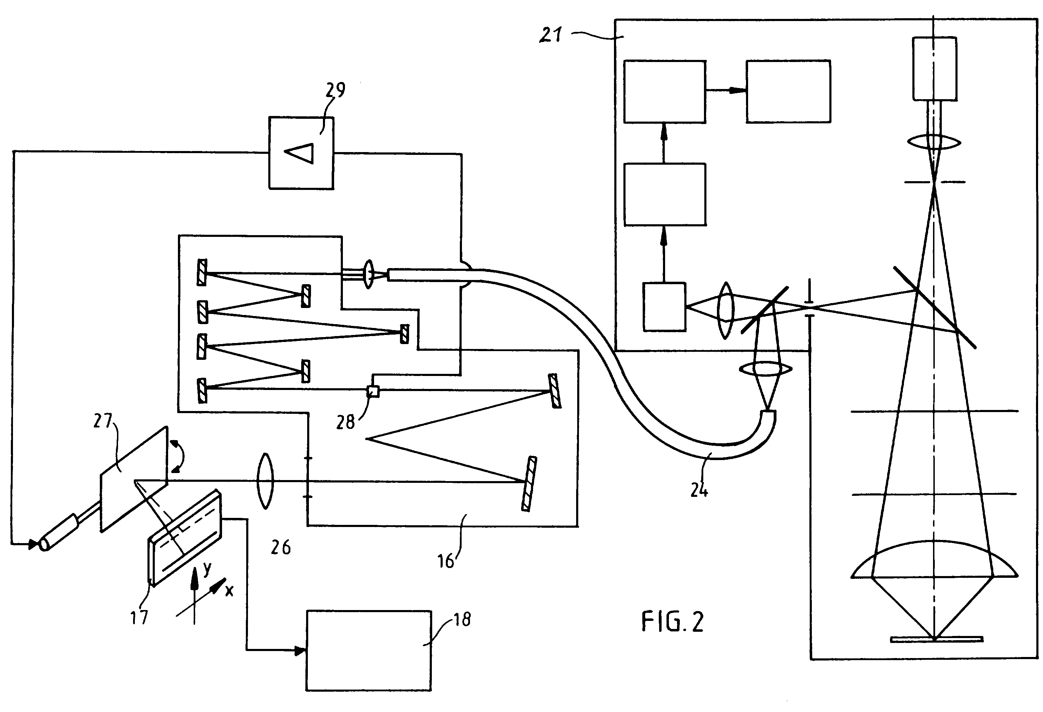

Die Einzelheiten der technischen Durchführung bei diesem Beispiel werden anhand der Fig. 2 veranschaulicht.

Ein kommerzielles CLSM 21 wird mit einem kommerziellen Dreifach-Spektrographen 16 dadurch gekoppelt, daß über einen Strahlenteiler 9 ein Teil des durch die Meßblende hindurchgehenden Meßlichtes aus dem Meßkanal des CLSM ausgekoppelt und über die Lichtleitfaser 24 in den Spektrographen eingeführt wird. Die ersten beiden Stufen des Spektrographen halten das elastisch, also ohne Wellenlängenänderung, gestreute Laserlicht zurück. Es verbleibt das durch Fluoreszenz oder durch den Raman-Effekt gestreute Licht. Dieses wird in der dritten Stufe des Spektrographen spektral zerlegt und auf das gekühlte zweidimensionale CCD-Array 17 abgebildet. Die Ortskoordinate auf dem CCD-Array, entlang der die spektrale Zerlegung des Meßlichtes erfolgt ist, wird im folgenden mit x bezeichnet.

Zwischen dem Austrittsspalt des Spektrographen und dem CCD-Array befindet sich eine Relaisoptik 26 mit einem elektromotorgesteuerten Drehspiegel 27. Durch den Drehspiegel ist eine Ablenkung des Meßlichtes in der zur oben erläuterten x-Richtung senkrechten y-Richtung des Arrays möglich.

Die Steuerung dieses Drehspiegels erfolgt nun über die in der zweiten Stufe des Spektrographen 16 mit dem Fotoempfänger 28 gemessene Intensität des elastisch in der Probe gestreuten Lichtes. Dies ist andererseits aber auch die Größe, die den Kontrast im konventionellen CLSM-Remissionsbild erzeugt. Das Fotoempfängersignal wird im Verstärker 29 verstärkt.

Die während eines vollständigen Scanprozesses zur Aufnahme eines CLSM-Bildes in dem CCD-Array gemessene Raman- (und Fluoreszenz-)Intensität wird danach ausgelesen und an den Rechner 18 zur weiteren Verarbeitung übertragen. Zur Verbesserung des Signal/Rausch-Verhältnisses kann auch über mehrere CLSM-Scans gemittelt werden.

Entscheidend für die Zuverlässigkeit der soeben beschriebenen Auswertungen ist die Abstimmung der Einstellzeit des Drehspiegels mit der Scanfrequenz des CLSM. Denn es muß sichergestellt sein, daß der Drehspiegel den der Struktur der untersuchten Probe entsprechenden zeitlichen Veränderungen der Remissions-Intensität ausreichend rasch folgen kann. Fordert man für die spektroskopische Zuordnung eine Ortauflösung von 5 Pixel und besitzt das CLSM-Bild eine Auflösung von 512*512 Pixel und eine Bildfrequenz von 1 Hz, so ist eine Spiegel-Einstellzeit von ca. 20 µsec erforderlich. Reduziert man die Bildfrequenz z.B. auf 0,05 Hz, so ist eine Spiegel-Einstellzeitvon ca. 0,4 msec ausreichend.

### Beispiel 2 beschreibt die elektronische Sortierung der Raman-Streuintensitäten.

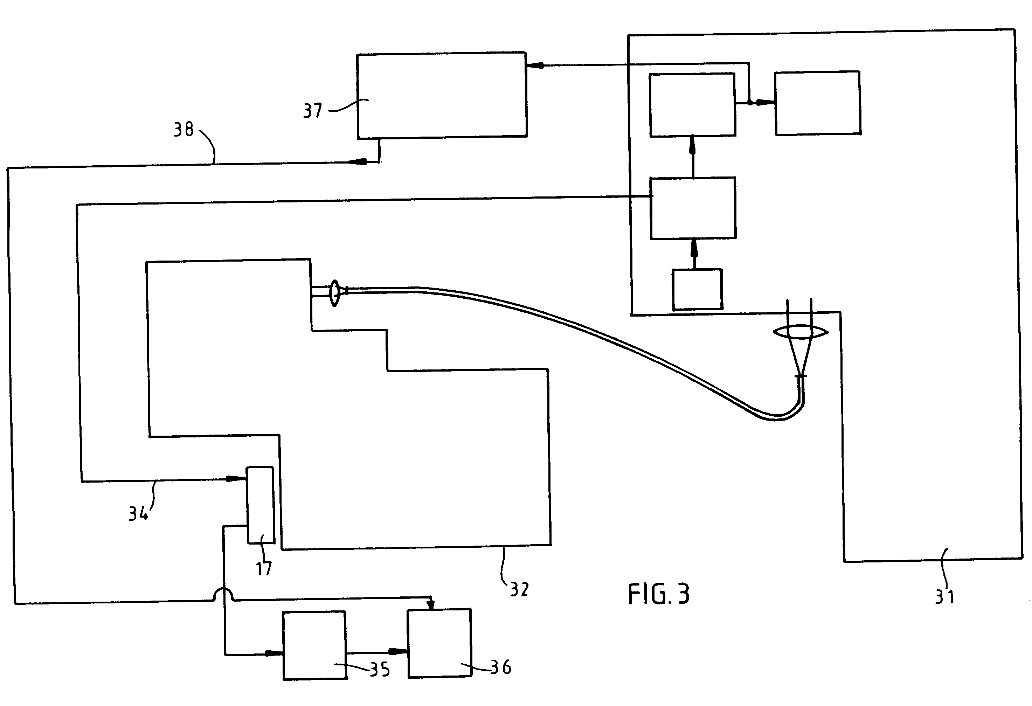

Die Einzelheiten der technischen Durchführung bei diesem Beispiel werden anhand der Fig. 3 veranschaulicht.

Die optische und optoelektrorische Ausführung des konfokalen Laserscanning-Mikroskops 31 und des Spektrographen 32 ist mit der im Beispiel 1 beschriebenen Anordnung identisch. Die aus dem Spektrographen austretende Raman- (und Fluoreszenz-)Intensität trifft in diesem Beispiel direkt auf ein eindimensionales CCD-Array 17 mit 1,024 Elementen. Die spektrale Zerlegung des Spektrographen ist so gewählt, daß der relevante Spektralbereich von diesem CCD-Array gerade erfaßt wird.

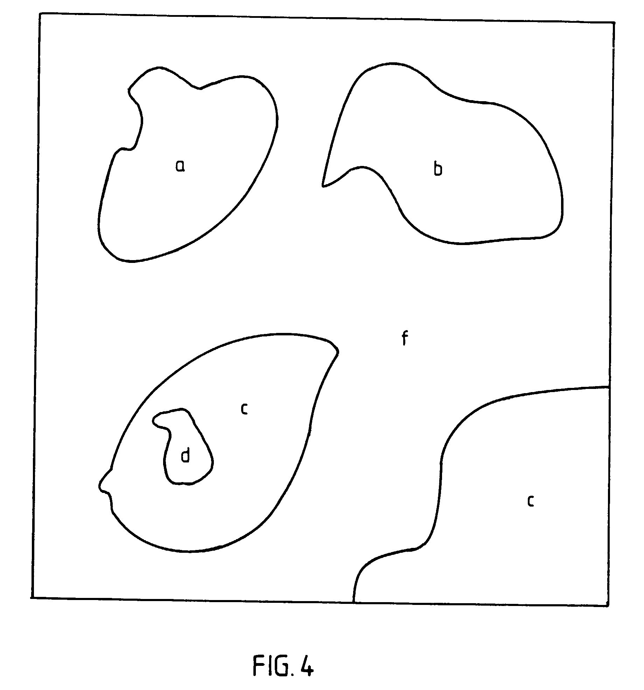

Die Übernahme der Raman-Intensität von den primären Fotodetektoren in die Ausgabezeile erfolgt synchron zur Detektion des eigentlichen CLSM-Bildes, indem das Synchronsignal 34 der CLSM-Elektronik an das CCD-Array übertragen wird. Diese Raman-Intensitäten werden in der Auslese-Elektronik 35 verstärkt und ergeben nach Analog/Digitalwandlung einen Datensatz von 1 024*8Bit=1 kByte pro Bildpixel. Diese Datensätze werden synchron zum Aufbau des konventionellen CLSM-Bildes in einem Speicherblock 36 von N Plätzen zu je 1 kByte aufaddiert. Die Zähl H liegt üblicherweise im Bereich 1<= N<= 10. Die Zuordnung erfolgt über eine sogenannte look-up-table (LUT), in der für jedes Bildpixel eine dieser Adressen 1 bis N vorgegeben wird. Geschieht die Zuordnung über die in H-Bereiche aufgelöste Intensitätsbestimmung des in der zweiten Stufe des Spektrometers gemessenen elastisch in der Probe gestreuten Lichtes, so läßt sich diese Zuordnung aufeinfache Weise mit einem einzigen Scan der Probe realisieren, indem beispielsweise das Intensitätssignal, das im ersten Beispiel den Spiegel steuerte, zur Addressierung der Speicherplätze der Ramanspektren im Speicherblock 36 verwendet wird. Andernfalls wird die LUT in einem der Aufnahme der Raman-Intensitäten vorangehenden Schrittberechnet:
Hierzu wird an demselben Probenausschnitt ein konventionelles CLSM-Rückstreubild aufgenommen und an das Bildanalysesystem 37 übertragen. Dieses Gerät führt an diesem Bild nach problemspezifisch festzulegenden Methoden Bildbereinigungs- und Bildverarbeitungsoperationen mit dem Ziel der Objekterkennung durch. Z.B. können alle ein- oder zweifach zusammenhängenden Objekte detektiert werden, die in sich eine annähernd gleiche Rückstreuintensität aufweisen und sich gegenüber ihrer Umgebung in dieser Intensität ausreichend unterscheiden und die überdies eine gewisse Mindestgröße aufweisen. Auf diese Weise wird der abgebildete Probenausschnitt in eine Anzahl von Objekten und - als Rest - deren Umgebung aufgeteilt. Letztere kann wieder aus mehreren Teilbereichen bestehen. D.h. es entstehen insgesamt N Objekte, aus denen das Bild des Probenausschnittes zusammengesetzt ist. Fig. 4 gibt ein typisches Beispiel einer derartigen Aufteilung (a, b, c, d, e und Hintergrund f) wieder. Falls die Zahl N für die anschließende Raman-Detektion noch zu groß ist, werden die Objekte anhand zusätzlicher Kriterien in Klassen eingeteilt. Schließlich werden die Objekte bzw. Objektklassen durchnumeriert. Der Aufbau der obengenannten LUT bestehtnun nur noch darin, für jedes Bildpixel zu bestimmen, zu welchem dieser H Objekte es gehört. Anschließend wird diese LUT vom Bildanalyse-Rechner an die Steuerelektronik der Raman-Signaldetektion übertragen 38.

Sind beide Schritte:
a) Aufnahme des konventionellen CLSM-Bildes und bildanalytische Berechnung der LUT und
b) Aufnahme der Raman-Intensitäten getrennt für jedes der unter a) definierten Objekte
abgeschlossen, kann für jedes der im CLSM-Bild erkannten Objekte das Raman-Spektrum analysiert werden. Ist z.B. durch andere analytische Verfahren die chemische Zusammensetzung der Probe als Ganzes bekannt, kann für jedes dieser Objekte das gemessene Raman-Spektrum mit den bekannten Raman-Spektren dieser in der Probe enthaltenen chemischen Bestandteile verglichen werden. Insbesondere kann durch bekannte mathematische Verfahren (z.B. bekannt aus Appl.Spectrosc. 33 (1979), p. 351-357) der Anteil dieser chemischen Bestandteile in den einzelnen Objekten des CLSM-Rückstreubildes quantitativ bestimmt werden.

## Patentansprüche

1. Verfahren zur Erzeugung und Korrelation lichtmikroskopischer Bilder und nach Wellenlängen aufgelöster Meßdaten von Proben durch ein- oder zweimalige Abtastung einzelner Elemente der abzubildenden Probenfläche mit einem konfokalen, scannenden Lichtmikroskop, Einkoppeln eines Teiles des von der Probenfläche remittierten Lichtes aus dem Abbildungsstrahlengang des Mikroskops in ein Spektrometer zur spektralen Analyse und Korrelation der Bildinformation mit den spektroskopischen Daten,
dadurch gekennzeichnet, daß die Abspeicherung der Daten in einem zweidimensionalen Bereich erfolgt, wobei eine Dimension zur Speicherung und Mittelung der gemessenen Spektren der einzelnen Bildelemente verwendet wird,
und die zweite Dimension durch eine in N Bereiche aufgeteilte Bildinformation der Bildelemente gebildet wird, wobei die Zahl N kleiner ist als die Zahl der Bildelemente und die Bildinformation aus der von den abgerasterten Bildelementen remittierten Lichtintensität direkt oder aus einer aus der Gesamtinformation des Probenbildes mittels Bildverarbeitung gewonnenen Objektzuordnung der abgerasterten Bildelemente besteht.

2. Verfahren nach Anspruch 1, dadurch gekennzeichnet, daß das Spektrum mittels eines Fotoempfängerfeldes gemessen und digitalisiert wird und in einem aus einer endlichen Zahl von Speichern mittels des digitalisierten Wertes der remittierten Lichtintensität ausgewählten Speichers abgespeichert wird.

3. Verfahren nach den Ansprüchen 1 und 2, dadurch gekennzeichnet, daß das Spektrum eines abgerasterten Elementes als Linie auf ein zweidimensionales Fotoempfängerfeld fokussiert wird und das Spektrum mittels einer im Strahlengang des Spektrometers angebrachten Ablenkeinheit, die mittels der remittierten Lichtintensität steuerbar ist, senkrecht verschoben wird.

4. Verfahren nach den Ansprüchen 1 bis 3 dadurch gekennzeichnet, daß als Fotoempfänger ein- oder zweidimensionale Anordnungen von lichtempfindlichen Halbleitern oder Sekundärelektronenvervielfachern verwendet werden.

5. Verfahren nach den Ansprüchen 3 bis 4, dadurch gekennzeichnet, daß als Ablenkeinheit ein elektrisch angetriebener Drehspiegel verwendet wird.

6. Verfahren nach Anspruch 1, dadurch gekennzeichnet, daß das in einem ersten Abtasten gewonnene Bild der Probenfläche durch Bildverarbeitung in N Bereiche unterteilt wird, denen die durch ein zweites Abtasten der Probenfläche erhaltenen Spektren zugeordnet werden.

7. Verfahren nach den Ansprüchen 1 bis 6, dadurch gekennzeichnet, daß als konfokales, scannendes Lichtmikroskop ein Mikroskop mit monochromatischer Lichtquelle oder ein Mikroskop mit einer ein kontinuierliches Spektrum aussendenden Lichtquelle verwendet wird.

8. Verfahren nach den Ansprüchen 1 bis 7, dadurch gekennzeichnet, daß als Spektrometer eines oder eine Kombination der folgenden Spektrometer verwendet wird:
a) Ramanspektrometer;
b) Fluoreszenzspektrometer;
c) Ultraviolettspektrometer;
d) Visuellspektrometer;
e) Infrarotspektrometer.

## Claims

1. Process for the production and correlation of light microscope images and measuring data resolved according to wavelength of samples by scanning individual elements of the sample surface to be imaged once or twice with a confocal scanning light microscope, launching of a portion of the light diffusely reflected by the sample surface from the imaging beam path of the microscope into a spectrometer for spectral analysis and correlation of the image information with the spectroscopic data,
characterized in that storage of the data is effected in a two-dimensional region, with one dimension being used to store and average the measured spectra of the individual image elements,
and the second dimension being formed by image information of the image elements which is divided into N regions, the number N being lower than the number of image elements and the image information directly comprising the light intensity diffusely reflected by the scanned image elements or comprising an object association of the scanned image elements which is obtained from the total information of the sample image by means of image processing.

2. Process according to claim 1, characterized in that the spectrum is measured and digitized by means of a photoelectric detector field and is stored in a memory selected from a finite number of memories by means of the digitized value of the diffusely reflected light intensity.

3. Process according to claims 1 and 2, characterized in that the spectrum of a scanned element is focused as a line onto a two-dimensional photoelectric detector field and the spectrum is vertically displaced by means of a deflection unit, which is provided in the beam path of the spectrometer and is controllable by means of the diffusely reflected light intensity.

4. Process according to claims 1 to 3, characterized in that one- or two-dimensional arrangements of light-sensitive semiconductors or secondary-emission multipliers are used as photoelectric detectors.

5. Process according to claims 3 to 4, characterized in that an electrically driven rotating mirror is used as a deflection unit.

6. Process according to claim 1, characterized in that the image of the sample surface obtained in a first scanning operation is divided by image processing into N regions, to which the spectra obtained by a second scanning operation of the sample surface are allocated.

7. Process according to claims 1 to 6, characterized in that a microscope with a monochromatic light source or a microscope with a light source emitting a continuous spectrum is used as a confocal scanning light microscope.

8. Process according to claims 1 to 7, characterized in that one or a combination of the following spectrometers is used as a spectrometer:
a) Raman spectrometer;
b) fluorescence spectrometer;
c) ultraviolet spectrometer;
d) visual spectrometer;
e) infrared spectrometer.

## Revendications

1. Procédé de production et de corrélation d'images obtenues par microscopie optique et de données de mesure, réparties selon les longueurs d'ondes, d'échantillons au moyen d'un balayage, effectué une fois ou deux fois, des différents éléments de la surface de l'échantillon dont il faut avoir une image, comportant un microscope optique à balayage, à foyer commun, couplage d'une partie de la lumière émise, par réflexion diffuse, par la surface de l'échantillon, pour la sortir du trajet des rayons de formation de l'image et du microscope et l'envoyer dans un spectromètre pour analyse spectrale et corrélation de l'information relative à l'image avec les données spectroscopiques,
caractérisé par le fait que la mémorisation des données se fait dans une zone bidimensionnelle, étant précisé qu'une dimension est employée pour mémoriser les spectres, mesurés, des différents éléments d'image et en établir la moyenne,
et que la seconde dimension est formée par une information, relative à l'image et répartie dans N zones, des éléments d'image, le nombre N étant inférieur au nombre des éléments d'image et l'information relative à l'image étant constituée de l'intensité lumineuse émise, par réflexion diffuse, par les éléments d'image balayés, directement ou à partir d'une correspondance-objet des éléments d'image balayés obtenue à partir de l'information globale de l'image de l'échantillon, au moyen d'un traitement de l'image.

2. Procédé selon la revendication 1, caractérisé par le fait que l'on mesure le spectre au moyen d'une zone de photo-récepteur et qu'on le numérise et qu'on le mémorise dans une mémoire choisie à partir d'un nombre fini de mémoires, au moyen de la valeur numérisée de l'intensité lumineuse émise par réflexion diffuse.

3. Procédé selon la revendication 1 et 2, caractérisé par le fait que l'on focalise le spectre d'un élément à balayer sous forme d'une ligne sur une zone bidimensionnelle du photo-récepteur et que l'on décale perpendiculairement le spectre au moyen d'un organe de déviation qui est rapporté sur le chemin des rayons du spectromètre et qui peut se commander au moyen de l'intensité lumineuse émise par réflexion diffuse.

4. Procédé selon la revendication 1 et 3, caractérisé par le fait que comme photo-récepteur on emploie des dispositifs monodimensionnels ou bidimensionnels de semiconducteurs sensibles à la lumière ou de multiplicateurs à électrons secondaires.

5. Procédé selon la revendication 3 à 4, caractérisé par le fait que comme organe de déviation on emploie un miroir tournant entraîné électriquement.

6. Procédé selon la revendication 1, caractérisé par le fait que l'image de la surface de l'échantillon obtenue dans un premier balayage est divisée, par traitement d'image, en N zones, auxquelles on fait correspondre les spectres obtenus par un second balayage de la surface de l'échantillon.

7. Procédé selon la revendication 1 à 6, caractérisé par le fait que comme microscope optique à balayage, à foyer commun, on emploie un microscope à source lumineuse monochromatique ou un microscope à source lumineuse émettant un spectre continu.

8. Procédé selon la revendication 1à 7 caractérisé par le fait que comme spectromètre on emploie l'un des spectromètres suivants ou une combinaison de ces spectromètres:
a) spectromètre à effet Raman;
b) spectromètre à fluorescence;
c) spectromètre dans l'ultraviolet;
d) spectromètre visuel
e) spectromètre dans l'infrarouge.
